# EUROPEAN PATENT APPLICATION

(11) **EP 4 487 683 A1**
(43) Date of publication of application: **08.01.2025**
(21) Application number: 24186243.2
(22) Date of filing: 03.07.2024
(51) Int. Cl.: A01N 25/04, A01N 25/30, A01N 37/40, A01N 43/40, A01N 43/90, A01P 1/00, A01P 3/00, A01P 5/00, A01P 7/00, A01P 9/00, A01P 11/00, A01P 13/00

(54) **AGROCHEMICAL ADJUVANTS AND FORMULATIONS**

(30) Priority: 03.07.2023 US 202363511715 P
(71) Applicant: Kraton Polymers Nederland B.V., 1322 CE Almere (NL)
(72) Inventor: HEEBNER, Gerald, The Woodlands, Texas 77380 (US); NEUMANN, Brett, The Woodlands, Texas 77380 (US); BRUCATO, Rebekah, The Woodlands, Texas 77380 (US)
(74) Representative: Henkel & Partner mbB

(57) **Abstract**

The disclosure relates to an adjuvant composition comprising decarboxylated rosin and a surfactant system for use in agrochemical formulations, and methods for making / using the same. The decarboxylated rosin acid adjuvant has a Kb value of 25-90, aniline point of 3-40°C, a δD value of 14-18, a 8P value of 3-6; and δH value of 7-10. The adjuvant composition comprising DCR aids in the stability of agrochemical compositions and inhibits/prevents separation of the active substances from the agrochemical composition.

## Description

### FIELD

The disclosure relates to adjuvant compositions comprising decarboxylated rosin ("DCR") for use in agrochemical formulations, and methods for making / using the same.

### BACKGROUND

Adjuvants are added to agrochemical compositions, e.g., fungicides, herbicides, insecticides, algicides, molluscicides, miticides, rodenticides, and insect repellents, to enhance their effectiveness and improve their performance. Adjuvants are not active ingredients themselves but are included to improve efficacy and efficiency of agrochemicals in various ways.

Adjuvants can help agrochemical compositions stick to plant /target surfaces preventing wash-off, penetrating the waxy layer of leaves, and / or allowing the active ingredients being absorbed by the plant or target insects. For some applications, adjuvants aid in minimizing spray drift, ensuring that the agrochemical is delivered precisely to the target area and reducing off-target effects. Additionally, adjuvants can act as compatibility agents, ensuring that all components of the agrochemical formulation remain stable and well-mixed.

There is a need for an improved adjuvant, with good performance and compatible with active component in the agrochemical composition.

### SUMMARY

In one aspect, the disclosure is related to an adjuvant package for use in an agrochemical composition. The adjuvant package consists essentially of 20-99 wt.% of a decarboxylated rosin acid and 1-80 wt.% of a surfactant system consisting essentially of one or more surfactants selected from nonionic, anionic, cationic, amphoteric surfactants, and mixtures thereof. The decarboxylated rosin acid has: a Kb value of 25-90, according to ASTM D1133; an aniline point of 3-40°C, according to ASTM D611; a δD value of 14-18, a δP value of 3-6; and δH value of 7-10. When the adjuvant package is diluted in liquid to 0.1-5% v/v, the liquid exhibits a surface tension of 20-40 dyn/cm.

In one aspect, the disclosure is related to an agrochemical concentrate. The agrochemical concentrate comprises 1-50 wt.% of an active ingredient selected from the group of fungicides, herbicides, insect repellents, insecticides, algicides, molluscicides, miticides, rodenticides, and mixtures thereof; 0.2-20 wt.% of a decarboxylated rosin acid; 0.01-10 wt.% of a surfactant system consisting essentially of one or more surfactants selected from nonionic, anionic, cationic, amphoteric surfactants, and mixtures thereof; and up to 30 wt.% components selected from dispersing agents, polymers, wetting agents, stabilizers, pH modifiers, anti-freeze agents, anti-drift agents, suspending agents, emulsifiers, humectants, antifoams, solvents, promoters, fertilizers, preservatives and combinations thereof. The decarboxylated rosin acid has: a Kb value of 25-90, according to ASTM D1133; an aniline point of 3-40°C, according to ASTM D611; a δD value of 14-18, a δP value of 3-6; and δH value of 7-10. When the agrochemical concentration is diluted in a liquid composition at a concentration of 0.25-5% v/v, the liquid composition has a Draves Wetting Time of < 300 seconds, per ASTM D2281.

In one aspect, the disclosure is related to an agrochemical composition for spraying onto a plant. The agrochemical composition comprises 0.01-5 wt.% of an active ingredient selected from the group of fungicides, herbicides, insect repellents, insecticides, algicides, molluscicides, miticides, rodenticides, and mixtures thereof; 0.002-5 wt.% of a decarboxylated rosin acid, .001-5 wt.% of a surfactant system consisting essentially of one or more surfactants selected from nonionic, anionic, cationic, amphoteric surfactants, and mixtures thereof; up to 5 wt.% components selected from dispersing agents, polymers, wetting agents, stabilizers, pH modifiers, anti-freeze agents, anti-drift agents, suspending agents, emulsifiers, humectants, antifoams, solvents, promoters, fertilizers, preservatives and combinations thereof; and up to 99.9 wt.% liquid. The decarboxylated rosin acid has: a Kb value of 25-90, according to ASTM D1133; an aniline point of 3-40°C, according to ASTM D61 1; a δD value of 14-18, a δP value of 3-6; and δH value of 7-10. The agrochemical composition has a Draves Wetting Time of < 300 seconds, per ASTM D2281.

In one aspect, the disclosure is related to a method of preparing an agrochemical composition. The method comprises the steps of: providing an active ingredient selected from the group of fungicides, herbicides, insect repellents, insecticides, algicides, molluscicides, miticides, rodenticides, and mixtures thereof; providing an adjuvant package; providing 0-5 wt.% of optional components selected from surfactants, dispersing agents, polymers, wetting agents, stabilizers, pH modifiers, anti-freeze agents, anti-drift agents, suspending agents, emulsifiers, humectants, antifoams, solvents, promoters, fertilizers, preservatives and combinations thereof; mixing the active ingredient, the adjuvant package, and the optional components to form an agrochemical concentrate; and diluting the agrochemical concentrate in liquid to 0.25-5% v/v forming the agrochemical composition. The adjuvant comprises, consists essentially of, or consists of 20-99 wt.% of a decarboxylated rosin acid, and 1-80 wt.% of a surfactant system consisting essentially of one or more surfactants selected from nonionic, anionic, cationic, amphoteric surfactants, and mixtures thereof. The decarboxylated rosin acid has: a Kb value of 25-90, according to ASTM D1133; an aniline point of 3-40°C, according to ASTM D61 1; a δD value of 14-18, a δP value of 3-6; and δH value of 7-10. The agrochemical composition has a Draves Wetting Time of < 300 seconds, per ASTM D2281.

In one aspect, the disclosure is related to an herbicidal composition. The herbicidal composition comprises: a decarboxylated rosin acid; a surfactant system consisting essentially of an ethoxylate and a fatty acid in a ratio of 1:10 or 10:1, based on the total weight of the surfactant system; an herbicidal active ingredient; and optional components. The decarboxylated rosin acid has: a Kb value of 25-90, measured using ASTM D1133; an aniline point of 3-40°C, according to ASTM D61 1; a δD value of 14-18, a δP value of 3-6; and δH value of 7-10. The herbicidal active ingredient is selected from the group consisting of: bicyclopyrone, mesotrione, fomesafen, glysophate, tralkoxydim, napropamide, amitraz, propanil, pyrimethanil, dicloran, tecnazene, toclofos methyl, flamprop M, 2,4-D, MCPA, mecoprop, clodinafop-propargyl, cyhalofop-butyl, diclofop methyl, haloxyfop, quizalofop-P, indol-3-ylacetic acid, 1-naphthylacetic acid, isoxaben, tebutam, chlorthal dimethyl, benomyl, benfuresate, dicamba, dichlobenil, benazolin, triazoxide, fluazuron, teflubenzuron, phenmedipham, acetochlor, alachlor, metolachlor, pretilachlor, thenylchlor, alloxydim, butroxydim, clethodim, cyciodim, sethoxydim, tepraloxydim, pendimethalin, dinoterb, bifenox, oxyfluorfen, acifluorfen, fluoroglycofen-ethyl, bromoxynil, ioxynil, imazamethabenz-methyl, imazapyr, imazaquin, imazethapyr, imazapic, imazamox, flumioxazin, flumiclorac-pentyl, picloram, amodosulfuron, chlorsulfuron, nicosulfuron, rimsulfuron, triasulfuron, triallate, pebulate, prosulfocarb, molinate, atrazine, simazine, cyanazine, ametryn, prometryn, terbuthylazine, terbutryn, sulcotrione, isoproturon, linuron, fenuron, chlorotoluron, metoxuron and mixtures thereof.

### DESCRIPTION

The following terms will have the following meanings:

"Consisting essentially of" means that the claimed composition primarily contains the specified materials, with allowances for additional components that do not materially affect novel characteristics or function of the claimed invention, with the additional components, if present, in an amount of < 30%, or < 20%, or < 10%.

"At least one of [a group such as A, B, and C]" or "any of [a group such as A, B, and C]" means a single member from the group, more than one member from the group, or a combination of members from the group. For example, at least one of A, B, and C includes, for example, A only, B only, or C only, as well as A and B, A and C, B and C; or A, B, and C, or any other all combinations of A, B, and C. In another example, at least one of A and means A only, B only, as well as A and B.

A list of embodiments presented as "A, B, or C" is to be interpreted as including the embodiments, A only, B only, C only, "A or B," "A or C," "B or C," or "A, B, or C."

"Any of A, B, or C" refers to one option from A, B, or C.

"Any of A, B, and C" refers to one or more options from A, B, and C.

"Agrochemical" composition refers to compositions for use agricultural applications, including herbicides, fungicides, insect repellants, insecticides, algicides, molluscicides, miticides, rodenticides, fertilizers, soil conditioners, and plant growth regulators.

"Draves Wetting Time" refers to the Draves Dispersion test or Draves Wetting test to evaluate the wetting and dispersing properties of adjuvants. "Draves Wetting Test" refers to the time it takes for a drop of liquid, e.g., water, to spread and wet a solid surface. Draves Wetting Time can be measured per ASTM D2281.

"Solubility Parameter" or (δ) of a solvent or polymer, refers to the square root of the vaporization energy (ΔE) divided by its molar volume (V), as in the equation δ = (ΔE/V)1/2. The more similar the solubility parameters of two substances, the higher will be the solubility between them and hence the expression "like dissolves like." Hansen established that the solubility parameter of a solvent or polymer is the result of the contribution of three types of interactions: dispersion forces (δD2), polar interactions (δP2), and hydrogen bonds (δH2) (Hansen, 2007; Hansen, 1967), with the total solubility (Hildebrand) parameter δT as the result of contribution of each of the three Hansen solubility parameters (HSP) according to: δT = (δ2D + δ2P + δ2H)½.

The disclosure relates to an adjuvant composition comprising, consisting essentially of, or consisting of decarboxylated rosin acid ("DCR"), surfactant system, and optional components, for use in agrochemical applications.

Decarboxylated Rosin Acid (DCR): The DCR is a rosin-derived composition obtained by decarboxylating a rosin acid, or by dimerizing and decarboxylating a rosin acid and separating / removing the dimerized species. The DCR is in the form of a liquid, and can be any of a crude DCR, a distilled or purified DCR, or mixtures thereof. The DCR can be hydrogenated and/or functionalized. Crude DCR is DCR containing 5-25 wt.% of higher molecular weight (450-1500 Da) components, e.g., hydrocarbons, oligomers, polymers, impurities, or dimer / trimer of fatty acids. Distilled or purified DCR refers to crude DCR having heavy fractions removed to improve color, reduce sulfur, etc. Hydrogenated DCR refers to DCR that has undergone hydrogenation for the reduction of C=C double bonds and obtain hydrogenated compounds. Unless specified otherwise, DCR herein refers to both unhydrogenated DCR (crude, distilled or purified), or hydrogenated DCR.

DCR is produced by the decomposition of rosin acids at high temperatures, e.g., 220-300°C. Rosin acids are normally solid, having a softening point of, e.g., 65-85°C. The rosin acid can be fully decarboxylated forming DCR. The rosin acid can be partially decarboxylated, forming DCR, which is a mixture of molecules, some of which contain monocarboxylic acids having a general molecular formula, e.g., C20H30O2.

In embodiments, the DCR comprises one or more C=C groups, 40 - 100 wt.% of tricyclic species having 18 - 20 carbon atoms, 0 - 30 wt.% of components with < 19 carbon atoms, and 40 - 100 wt.% of components with a molecular formula in the range from C19H20 to C19H34, based on the total weight of the DCR. In embodiments, sum of tricyclic species as aromatic and cycloaliphatic in the DCR is > 50 wt.%, or > 55 wt.%, or > 60 wt.%, or > 74 wt.%, or > 90 wt. %, or up to 100 wt.%, of total weight of the DCR. Aromatic DCR is defined as DCR species having a MW of 252-256, with MW of 254 as having a reactive double bond, and cycloaliphatic DCR is defined as DCR species having a MW of 260 or 262.

In embodiments, the DCR has a C19 (MW 248-262) content of > 50 wt.%, or > 60 wt.%, or > 70 wt.%, or > 80 wt.%. In embodiments, the amount of cycloaliphatic DCR (MW 260 and 262) is > 15 wt.%, or > 20 wt.%, or > 30 wt.%, or > 40 wt. %, or > 50 wt.%, or > 80 wt. %, based on the total weight of the DCR.

In embodiments, total amount of tricyclic species having reactive double bond (C=C group) is < 5 wt.%, < 3 wt.%, < 1 wt.%, or 0 wt.% of total weight of the DCR. Reactive C=C group is defined as DCR species having a MW of 254 or 258.

In embodiments, the DCR has C19 species with MWs of 254, 250, and 248 in an amount of < 5 wt.%, or < 3 wt.%, or < 1 wt.%, or < 0.5 wt.%, or 0 wt.%.

In embodiments, the DCR has a C13 species with MWs of 174 and 180 in an amount of 5-20 wt.%, or 5-15 wt.%, or > 5 wt.% or < 20 wt.%.

In embodiments after hydrogenation, the amount of tricyclic species having 18 - 20 carbon atoms in the hDCR goes up to at least 70 wt.%, or 75 - 100, or 75 - 95, or 80 - 100, or 80 - 95 wt.%, based on total weight of the hDCR .

In embodiments before hydrogenation, the unhydrogenated DCR contains C19 species with a MW of 262 in an amount of 5-20 wt.%, or 5-15 wt.%, or < 25 wt.%, or < 20 wt.%, or < 15 wt.%. After hydrogenation, the hDCR contains C19 species with a MW of 262 in an amount of 25-100 wt.%, or 25-90 wt.%, or 25-80 wt.%, or 40-75 wt.%, or 50-70 wt.%, or > 25 wt.%, or > 35 wt.%, or > 50 wt.%, or > 75 wt.%.

In embodiments before hydrogenation, the unhydrogenated DCR contains C19 species with a MW of 260 in an amount of 5-25 wt.%, or 10-20 wt.%, or > 5 wt.%, or > 10 wt.%, or > 15 wt.%, or < 20 wt.%. After hydrogenation, the hDCR contains C19 species with a MW of 260 in an amount of 0-5 wt.%, or 0-3 wt.%, or 0-1 wt.%, or < 5 wt.%, or < 2 wt.%, or 0 wt.%.

In embodiments before hydrogenation, the unhydrogenated DCR contains C19 species with a MW of 256 in an amount of 35-55 wt.%, or 40-50 wt.%, or > 37 wt.%, or > 40 wt.%, or > 45 wt.%. After hydrogenation the hDCR contains C19 species with a MW of 256 in an amount of 0-40 wt.%, or 5-35 wt.%, or 10-30 wt.%, or < 40 wt.%, or < 30 wt.%.

In embodiments before hydrogenation, the unhydrogenated DCR contains C19 species with a MW of 252 in an amount of 5 - 20 wt.%, or 5-15 wt.%, > 5 wt.%, or > 10 wt.%. After hydrogenation, the hDCR contains C19 species with a MW of 252 in an amount of 0-5 wt.%, or 0-3 wt.%, or < 5 wt.%, or < 3 wt.%, or < 1 wt.%, or 0 wt.%.

In embodiments before hydrogenation, the unhydrogenated DCR contains C13 species with a MW of 180 in an amount of 0-5 wt.%, or 0-3 wt.%, or < 5 wt.%, or < 2 wt.%, or < 1 wt.%, or 0 wt.%. After hydrogenation, the hDCR contains C13 species with a MW of 180 in an amount of 0-25 wt.%, or 5-20 wt.%, or 5-15 wt.%, or > 5 wt.%, or > 7 wt.%, or > 10 wt.%.

In embodiments before hydrogenation, the unhydrogenated DCR contains C13 species with a MW of 174 in an amount of 5-25 wt.%, 5-20 wt.%, or 5-15 wt.%, or > 5 wt.%, or > 10 wt.%, or < 20 wt.%. After hydrogenation, the hDCR contains C13 species with a MW of 174 in an amount of 0-5 wt.%, or 0-3 wt.%, or < 5 wt.%, of < 2 wt.%, or 0 wt.%.

The MW of the species in unhydrogenated DCR and hDCR as measured using the analytical methods previously specified (e.g., MS, MS /GC / HPLC, and GC-MS) can be identified by the following retention profile: MW of 174 g/mol, 7.0 - 8.5 minutes; MW of 180 g/mol, 2.5 - 4.0 minutes; MW of 248 g/mol, 32.5 - 34.5 minutes; MW of 250 g/mol, 26.0 - 31.0 minutes; MW of 252 g/mol, 24.5 - 31.0 minutes; MW of 254 g/mol, 16.5 - 25.0 minutes; MW of 256 g/mol, 16.5 - 25.0 minutes; MW of 260 g/mol, 11.0 - 16.0 minutes; and MW of 262 g/mol, 11.0 - 16.0 minutes. For components with overlapping retention time ranges, the mass spectrum of each peak is used to identify the MW of the component. Components with the same MW (isomers) are clustered and the total amount per isomer is reported.

In embodiments, the hDCR comprises at least 5 isomers, or 10 isomers, or 20 isomers, or 50 isomers, or 100 isomers of a species having a molecular formula of C19H34 and a MW of 262 g/mol.

In embodiments after hydrogenation, the hDCR comprises C=C double bonds in amounts of < 40%, or < 30%, or < 20%, or < 15%, or < 10%, or < 5%, or > 1%, or 1 - 40%, or 2 - 20%, or 1 - 10%.

In embodiments after hydrogenation, the hDCR comprises an average Double Bond Equivalent in an amount of 0.1 - 2, or 0.2 - 1.5, or 0.5 - 1.4, or 0.5 - 2, or < 2, or < 1.8, or < 1.5, or < 1.2, or > 0.1.

In embodiments, DCR is characterized as having a m/z (mass/charge) value in the range of 170 - 280, or 220 - 280, or 230 - 270, or 234 - 262, or 235 - 265, or > 230, or < 265, measured by GC-FID-MS.

In embodiments, DCR is characterized as having an oxygen content of < 5%, or < 3%, or < 2%, or < 0.9%, or < 0.5, or < 0.2%, or < 0.1%, or 0-5%, or 0-3%, or 0-2%, or 0-1%. The oxygen content (in %) can be calculated as oxygen to carbon ratio, or the sum of oxygen atoms present divided by sum of carbon atoms present, with the number of oxygen and carbon atoms being obtained from elemental analyses.

In embodiments, unhydrogenated DCR is characterized as having a lower acid value (carboxylic acid content) than the rosin acid feedstock for making the DCR. In embodiments, the DCR has an acid value of < 50, or < 45, or < 40, or < 35, or < 30, or < 25, or < 20, or < 15, or < 10, or < 7, or < 5, or 0.5-40, or 0.5-30, or 0.5-20, or 1-20, or 1-15, or 1-15, or 1-10 mg/KOH, as measured using ASTM D1240-14 (2018) or ASTM D465.

In embodiments, hDCR has an acid value of < 1, or < 0.8, or < 0.5, or < 0.2, or 0.01-1, or 0.1-0.8, or 0.01-0.5 mg KOH/g, as measured using ASTM D1240-14 (2018) or ASTM D465.

In embodiments, DCR has a density of 0.9-1.0, or 0.91-0.99, or 0.92-0.98, or 0.93-0.97, or 0.94-0.96, or > 0.9, or < 1.1 g/cm3.

In embodiments, DCR is characterized as having viscosities comparable to those of petrochemical base oils, due in part to its relatively high molecular weights, for example, a viscosity of 5-60, or 10-60, 15-60, or 5-55, or 10-50, or 10-45, or 15-40, or > 5, or > 10, or > 20, or > 25, or > 28, or < 45, or < 50, or < 60 cSt according to ASTM D-445, measured at 40°C.

In embodiments, unhydrogenated DCR has an aniline point of 3-40°C, or 5-40°C, or 5-30°C , or 5-25°C, or 2-20°C, or 5-20°C, or 5-15°C, or < 25°C, or < 20°C, or > 3°C , or > 5°C, or > 8°C, according to ASTM D611.

In embodiments, hDCR has an aniline point of 20-80°C, 30-70°C, 30-60°C, 40-50°C, or > 20°C, or > 30°C, or > 40°C, or < 70°C, according to ASTM D611.

In embodiments, unhydrogenated DCR has a pour point of -40 to +10°C, or - 35 to +8°C, -30 to +5°C, or -30 to +0°C, or -30 to -5°C, or -28 to 0°C, or -28 to -5°C, or -28 to -10°C, or > -40°C, or > -30°C, or > -28°C, or < +5°C, or < +10°C, according to ASTM D97.

In embodiments, hDCR has a pour point of -40 to -10°C, or -35 to -20°C, or - 35 to -25°C, or < 0°C, or < -5°C, < -10°C, or > -40°C, or > -35°C, or according to ASTM D97.

In embodiments, unhydrogenated DCR has a flash point of 135-180°C or 135-175°C, or 135-165°C, or 135-160°C, or 140-175°C, or 140-160°C, or 140-158°C, or 140-155°C, or > 135°C, or > 140°C, or < 175°C, or < 165°C, or < 160°C, according to ASTM D92.

In embodiments, hDCR has a flash point of 95-140°C, or 100-135°C, or 95-135°C, or < 140°C, or < 135°C, or > 95°C, or > 100°C, according to ASTM D92.

In embodiments, DCR has a boiling point of 200-390°C, or 210-390°C, or 235-390°C, or 280-380oC, or 290-370oC, or 300-360oC, or > 290oC, or > 230°C, or > 210°C, or < 400°C, or < 370oC, measured according to ASTM D2887.

In embodiments, unhydrogenated DCR has a Gardner Color of 0-12.0, or 0.5-12.0, or 0.8-12.0, or 0.9-11, or 1.0-10.0, or 1.0-6.0, or 1.0-5, or > 0, or > 1.0, or > 1.2, or < 10.0, or < 7.0, or < 6.0, or <5.0, or < 2.4, or < 3.0, according to ASTM D6166.

In embodiments, hDCR has a Gardner Color of < 1, or < 0.8, or < 0.5, or < 0.2, or 0.1-1, or 0.15-0.8, or 0.1-0.5, according to ASTM D6166.

In embodiments, unhydrogenated DCR has a sulfur content of < 500 ppm (0.05 wt.%), or < 300 ppm (0.03 wt.%), or < 200 ppm (0.02 wt.%), or < 100 ppm (0.01 wt.%), or < 10 ppm (0.001 wt.%), or 20-700 ppm (0.002-0.7 wt.%), 30-500 ppm (0.003-0.5 wt.%), or 40-400 ppm (0.004-0.4 wt.%), or 40-300 ppm (0.004-0.3 wt.%), or 40-200 ppm (0.004-0.2 wt.%), based on total weight of the DCR, measured according to ASTM D5453.

In embodiments, hDCR has a sulfur content of 0.001-10 ppm, or 0.001-5 ppm, or < 10 ppm, or < 8 ppm, or < 5 ppm, or > 0.001 ppm, measured according to ASTM D5453.

In embodiments, DCR has a VOC of < 5, or < 4.75, or < 4.5, or < 4.25, or < 4.0, or < 3.75, or < 3.5, or < 3.25, or < 3.0, or < 2.75, or < 2.5, or < 2.25, or < 2.0, or < 1.5, or < 1.0, or < 0.5 wt.%, based on total weight of the DCR. The VOC of the DCR is measured according to methods: i) summing the percent by weight contribution from all VOCs present in the product at 0.01% or more, or ii) according to the EPA (Environmental Protection Agency) method 24 or equivalent.

In embodiments, DCR has a Kb (Kauri butanol) value of 25-90, or 30-85, or 35-80, or 40-75, or 45-70, or 50-65, or > 40, or > 50, or > 60, or > 70, or > 80, according to ASTM D1133.

In embodiments, unhydrogenated DCR has a viscosity index of > -200, or - 200 to -50, or < 0, or < -50, measured according to ASTM D2270. In embodiments, hDCR has a viscosity index of < 25, or < 0, or -50 to 0, or > -50, measured according to ASTM D2270. The viscosity index is an arbitrary, unit-less measure of a fluid's change in viscosity relative to temperature change, for example, index of viscosity at 40°C and viscosity at 100°C.

In embodiments, DCR has a δD value of 14-18, or 14.2-17.8, or 14.5-17.5, or 15-17, or 15.2-16.5; a δP value of 3-6, or 3.2-5.5, or 3.4-5.2, or 3.5-5.0; and δH value of 7-10, or 7.5-9.5, or 8-9, or 8.2-8.8.

In embodiments, unhydrogenated DCR has a surface tension of 25-50, or 28-45, or 30-40 dynes/cm, according to ASTM D1331.

In embodiments, the DCR is present in the adjuvant composition in an amount of 20-99 wt.%, or 20-95 wt.%, or 25-95 wt.%, or 30-95 wt.%, or 40-95 wt.%, or 50-95 wt.%, or 60-95 wt.%, 70-95 wt.%, or 80-95 wt.%, or 80-90 wt.%, based on the total weight of the adjuvant composition.

In embodiments, the DCR is present in an agrochemical concentrate (for subsequent dilution in final application) in an amount of 0.2-20 wt.%, or 0.2-15 wt.%, or 0.2-10 wt.%, or 0.2-7.5 wt.%, or 0.2-5 wt.%, or 0.2-3 wt.%, or 0.2-2 wt.%, 0.2-2 wt.%, or 0.8-18 wt.%, or < 2 wt.%, or < 3 wt.% or < 5 wt.%, based on the total weight of the agrochemical concentrate.

In embodiments, the DCR is present in an agrochemical composition to be applied in an amount of 0.002-5 wt.%, or 0.002-4 wt.%, or 0.002-2 wt.%, or 0.02-5 wt.%, or 0.02-4 wt.%, or 0.02-2 wt.%, > 0.002 wt.%, or > 0.02 wt.%, or > 0.005 wt.%, or > 0.05 wt.%, or < 5 wt.%, or < 3 wt.%, or < 2 wt.%, or < 1 wt.%, based on the total weight of the agrochemical composition.

Surfactant System: In addition to the DCR, the adjuvant composition contains a surfactant system. The surfactant system can be a single surfactant being used, or it can be a mixture of two or more surfactants selected from nonionic, anionic, cationic, amphoteric surfactants, and mixtures thereof. In embodiments, the surfactant is at least a nonionic surfactant or an anionic surfactant. In embodiments, the surfactant is at least a nonionic surfactant.

In embodiments, the nonionic surfactant (which includes a blend of surfactants) has a Hydrophilic Lipophilic Balance (HLB) 6-18, or 8-18, or 9-18, or 8-15, or 9-13.

In embodiments, the nonionic surfactant comprises, consists essentially of, or consists of ethoxylates, fatty acid derivatives, block copolymers, alkyl polyglucosides, and mixtures thereof.

In embodiments, the nonionic surfactant is an ethoxylate selected from the group of alcohol ethoxylates, fatty alcohol ethoxylates, alkylphenol ethoxylates, fatty acid ethoxylates, ethoxylated amines, and mixtures thereof. In embodiments, the nonionic surfactant is selected from the group consisting of alkylphenol ethoxylates, fatty acid ethoxylates, and mixtures thereof. Examples of ethoxylated surfactants include nonoxynol-9, lauryl alcohol ethoxylates, octaethylene glycol monododecyl ether, pentaethylene glycol monododecyl ether, nonylphenol ethoxylates, octylphenol ethoxylates, nonoxynol, Triton X-100, stearic fatty acid ethoxylates, oleic fatty acid ethoxylates, lauryl fatty acid ethoxylates, polyethoxylated tallow amine, cocoamine ethoxylates, tallowamine ethoxylates, and mixtures thereof. In embodiments, when the ethoxylate is a nonylphenol ethoxylate, the degree of ethoxylation ranges from 1-40, or 1-30, or 1-20, or 2-10 moles of ethylene oxide per mole of nonylphenol.

In embodiments, the nonionic surfactant is fatty acid derivative selected from the group of fatty acid amides, fatty acid esters of glycerol, fatty acid esters of sorbitol, fatty acid esters of sucrose, and mixtures thereof. Examples of fatty acid amide surfactants include cocamide monoethanolamine, coamide diethanolamine, glyercol monostearate, glycerol monolaurate, sorbitan monolaurate, sorbitan monostearate, sorbitan tristearate, sucrose stearate, sucrose palmitate, sucrose laurate, sucrose cocoate, sucrose oleate, sucrose myristate, surcrose behenate, and mixtures thereof.

In embodiments, the nonionic surfactant is selected from the group consisting of alkylphenol ethoxylates, fatty acid ethoxylates, and mixtures thereof.

In embodiments, the nonionic surfactant is a block copolymer surfactant selected from the group of poloxamers, tetronics, polysorbates, PEG (polyethylene glycol) copolymers, PPG (polypropylene glycol) copolymers, PEG-PPG copolymers, PEG-polyester block copolymers, and mixtures thereof. Examples of block copolymer surfactants include ethylene oxide/propylene oxide block copolymers, block copolymers consisting of PEG and sorbitan esters, copolymers of alternating PEG and PPG units, copolymers of PEG blocks linked with polyester blocks (such as polycaprolactone or polylactic acid), and mixtures thereof.

In embodiments, the nonionic surfactant is an alkyl polyglucosides selected from the group of alkyl polyglucosides (such as decyl glucoside, lauryl glucoside and octyl glucoside).

In embodiments, the anionic surfactant is selected from sulfate, sulfonate, phosphate and carboxylate surfactants. Anionic surfactants can be used in free acid form or in neutralised form, such as salt forms including ammonium, organic amine, magnesium, potassium and sodium salt forms. Some examples of anionic surfactants that can suitably be used either alone or in combination with one or more other surfactants include: alkyl sulfates (such as sodium lauryl sulfate and sodium dodecyl sulfate); alkyl ether sulfates (such as sodium laureth sulfate and sodium myreth sulfate); sulfosuccinates (such as sodium dioctyl sulfosuccinate); alkylbenzene sulfonates (such as dodecylbenzene sulfonate and dodecyl diphenyl ether disulfonate); aryl-alkyl ether phosphates; alkyl ether phosphates; and alkyl carboxylates (such as sodium stearate, sodium laurate, and sodium lauroyl sarcosinate). Surfactants derived from direct sulfonation of hydrocarbons, such as alpha olefine sulfonates and secondary alkane sulphonates may be used.

In embodiments, the cationic surfactant selected from quaternary ammonium compounds and pH-dependent primary, secondary or tertiary amines. Cationic surfactants can be used in neutralised form, such as salt forms including bromide and chloride salt forms. Some examples of cationic surfactants that can suitably be used either alone or in combination with one or more other surfactants include alkyl quaternary ammonium compounds such as: behentrimonium chloride, benzalkonium chlorides (BAC) including dimethylbenzyl ammonium chloride, cetalkonium chloride (CKC) and stearalkonium chloride, benzethonium chloride, benzododecinium chloride, carbethopendecinium bromide, cetrimonium bromide (CTAB), cetrimonium chloride (CTAC), cetylpyridinium chloride (CPC), didecylmethylammonium chloride, dimethyldioctadecylammonium bromide (DODAB), dimethyldioctadecylammonium chloride, domiphen bromide, octenidine dihydrochloride, and thonzonium bromide.

In embodiments, the amphoteric surfactant having acidic and basic groups within the same surfactant molecule. The acidic and basic groups can form anionic or cationic groups, depending on pH. Amphoteric surfactants can be zwitterionic and carry both a negative and positive charge at certain pH. Amphoteric surfactants can be employed in some circumstances as such surfactants can behave as cationic or anionic surfactants under certain pH conditions. For example, at acidic or low pH (e.g., pH <6), the amphoteric surfactant will become protonated and can act as cationic surfactants, whereas at alkaline or high pH (e.g. pH >8), the amphoteric surfactant will become deprotonated and act as an anionic surfactant. Some examples of amphoteric surfactants that can suitably be used either alone or in combination with one or more other surfactants include alkyl amine oxides such as lauramine oxide and myristamine oxide; betaines such as cocamidopropylbetaine; hydroxysultaines such as lauramidopropyl hydroxysultaine, cocamidopropyl hydroxysultaine, oleimidopropyl hydroxysultaine, tallowamidopropyl hydroxysultaine, erucamidopropyl hydroxysultaine, and lauryl hydroxysultaine; and amphoacetates such as sodium lauramphoacetate.

In embodiments, the surfactant system further comprises a fatty acid as a co-surfactant. In embodiments where the fatty acid co-surfactant is present, the co-surfactant is present in a ratio of 1:10 or 10:1, or 1:8 to 8:1, or 1:6 to 6:1, or 1:4 to 4:1, or 1:3 to 3:1, 1:2 to 2:1, or about 1:1, based on the total weight of the surfactant system. In embodiments, the fatty acid is a tall oil fatty acid.

The surfactant system is present in an adjuvant composition in 1-30 wt.%, or 1-25 wt.%, or 1-20 wt.%, 5-25 wt.%, or 5-15 wt.%, 10-20 wt.%, or < 20 wt.%, or < 15 wt.%, based on the total weight of the adjuvant composition.

In embodiments, the surfactant system is present in an agrochemical concentrate in an amount of 0.01-10 wt.%, or 0.01-7.5 wt.%, or 0.01-5 wt.%, or 0.01-3 wt.%, or 0.01-2 wt.%, 0.1-2 wt.%, or < 2, or < 3, or < 5, based on the total weight of the agrochemical concentrate.

In embodiments, the surfactant system is present in a diluted agrochemical composition in an amount of 0.001-5 wt.%, or 0.001-4 wt.%, or 0.001-2 wt.%, or 0.01-5 wt.%, or 0.01-4 wt.%, or 0.01-2 wt.%, > 0.001 wt.%, or > 0.01 wt.%, or > 0.005 wt.%, or > 0.05 wt.%, or < 5 wt.%, or < 3 wt.%, or < 2 wt.%, or < 1 wt.%, based on the total weight of the diluted agrochemical composition.

Optional Components: The agrochemical compositions can optionally comprise additives. Examples of such additives include, but are not limited to, surfactants or dispersing agents, polymers, wetting agents, stabilizers, pH modifiers, anti-freeze agents, anti-drift agents, suspending agents, emulsifiers, humectants, antifoams, solvents, promoters, fertilizers, preservatives and combinations thereof.

In embodiments, the optional components are present in an amount of 1-20 wt.%, 1-10 wt.%, or 1-5 wt.%, based on the total weight of the adjuvant composition.

In embodiments, the optional components are present in an agrochemical concentrate in an amount of 1-30 wt.%, 1-20 wt.%, 1-10 wt.%, or 1-5 wt.%, based on the total weight of the agrochemical concentrate.

In embodiments, the optional components are present in a diluted agrochemical composition in an amount of 0.01-5 wt.%, or 0.01-4 wt.%, or 0.01-2 wt.%, or 0.1-5 wt.%, or 0.1-4 wt.%, or 0.1-2 wt.%, > 0.01 wt.%, or > 0.1 wt.%, or < 5 wt.%, or < 3 wt.%, or < 2 wt.%, based on the total weight of the diluted agrochemical composition.

Methods of Making Adjuvant: The adjuvant can be formed by combining the DCR, surfactant system, and optionally additional components in any order. In embodiments, DCR is combined with water to form an intermediate, then the surfactant and optionally additional components are added to this intermediate to form the adjuvant.

Agrochemical Composition: The adjuvant is added with active ingredient(s) to form agrochemical compositions. Active ingredient can be any of pesticides, fungicides, herbicides, algicides, insecticides, molluscicides, miticides, rodenticides, and insect repellents, as disclosed in The Pesticide Manual 19th Edition, British Crop Production Council (BCPC), 2021. Active ingredients are used to target plants, animals (such as insects, rodents, etc.), bacteria, fungi, and the like.

In embodiments, the active ingredient is an herbicide active ingredient. Examples include, but are not limited to, acetyl-CoA carboxylase inhibitors, acetolactate synthase inhibitors, amides, auxin herbicides, auxin transport inhibitors, carotinoid biosynthesis inhibitors, enolpyruvylshikimate-3-phosphate synthase inhibitors, glutamine synthetase inhibitors, lipid biosynthesis inhibitors, mitosis inhibitors, protoporphyrinogen IX oxidase inhibitors, photosynthesis inhibitors, synergists, growth substances, cell wall synthesis inhibitors, and combinations thereof. In embodiments, the herbicides are selected from the group of bicyclopyrone, mesotrione, fomesafen, glysophate, tralkoxydim, napropamide, amitraz, propanil, pyrimethanil, dicloran, tecnazene, toclofos methyl, flamprop M, 2,4-D, MCPA, mecoprop, clodinafop-propargyl, cyhalofop-butyl, diclofop methyl, haloxyfop, quizalofop-P, indol-3-ylacetic acid, 1-naphthylacetic acid, isoxaben, tebutam, chlorthal dimethyl, benomyl, benfuresate, dicamba, dichlobenil, benazolin, triazoxide, fluazuron, teflubenzuron, phenmedipham, acetochlor, alachlor, metolachlor, pretilachlor, thenylchlor, alloxydim, butroxydim, clethodim, cyciodim, sethoxydim, tepraloxydim, pendimethalin, dinoterb, bifenox, oxyfluorfen, acifluorfen, fluoroglycofen-ethyl, bromoxynil, ioxynil, imazamethabenz-methyl, imazapyr, imazaquin, imazethapyr, imazapic, imazamox, flumioxazin, flumiclorac-pentyl, picloram, amodosulfuron, chlorsulfuron, nicosulfuron, rimsulfuron, triasulfuron, triallate, pebulate, prosulfocarb, molinate, atrazine, simazine, cyanazine, ametryn, prometryn, terbuthylazine, terbutryn, sulcotrione, isoproturon, linuron, fenuron, chlorotoluron, metoxuron and mixtures thereof.

In embodiments, the active ingredient is fungicide, selected from the group of isopyrazam, mandipropamid, azoxystrobin, trifloxystrobin, kresoxim methyl, famoxadone, metominostrobin and picoxystrobin, cyprodanil, carbendazim, thiabendazole, dimethomorph, vinclozolin, iprodione, dithiocarbamate, imazalil, prochloraz, fluquinconazole, epoxiconazole, flutriafol, azaconazole, bitertanol, bromuconazole, cyproconazole, difenoconazole, hexaconazole, paclobutrazole, propiconazole, tebuconazole, triadimefon, trtiticonazole, fenpropimorph, tridemorph, fenpropidin, mancozeb, metiram, chlorothalonil, thiram, ziram, captafol, captan, folpet, fluazinam, flutolanil, carboxin, metalaxyl, bupirimate, ethirimol, dimoxystrobin, fluoxastrobin, orysastrobin, metominostrobin and prothioconazole.

In embodiments, the active ingredient is an insecticide. Examples include pyrethroids such as lambda-cyhalothrin, cypermethrin, and deltamethrin; organophosphates such as malathion and chlorpyrifos; neonicotinoids such as imidacloprid, clothianidin, and thiamethoxam; carbamates such as carbaryl and methomyl; and insect growth regulators such as methoprene and pyriproxyfen. In embodiments, the insecticide is selected from the group of thiamethoxam, imidacloprid, acetamiprid, clothianidin, dinotefuran, nitenpyram, fipronil, abamectin, emamectin, bendiocarb, carbaryl, fenoxycarb, isoprocarb, pirimicarb, propoxur, xylylcarb, asulam, chlorpropham, endosulfan, heptachlor, tebufenozide, bensultap, diethofencarb, pirimiphos methyl, aldicarb, methomyl, cyprmethrin, bioallethrin, deltamethrin, lambda cyhalothrin, cyhalothrin, cyfluthrin, fenvalerate, imiprothrin, permethrin and halfenprox.

The agrochemical composition can include relatively high amounts of the active ingredient as a concentrate, as compared to formulations that are finally applied by an end-user as diluted agrochemical compositions. For example, the agrochemical composition may be a suspension concentrate with a high concentration of active ingredients that is further diluted with a solvent, e.g., water, etc., for application. The solvent (or liquid) component may include water, water-miscible liquids, oils, oil-miscible liquids, propylene glycol, tripropylene glycol, acetaldehyde, other known carriers, and combinations thereof. In embodiments, the solvent is water.

The amount of the active ingredients varies depending on whether the agrochemical composition is a concentrate, or for use as a final application. In embodiments, the agrochemical composition is a concentrate with the active ingredients being present in amounts of 1-50 wt.%, or 1-40 wt.%, or 1-30 wt.%, or 1-25 wt.%, or > 1, wt.% or > 5 wt.%, or < 60 wt.%, or < 50 wt.%, or < 40 wt.%. In embodiments, the agrochemical composition is diluted for a final application concentration with the active ingredients being present in amounts of 0.01-5 wt.%, or 0.01-4 wt.%, or 0.01-2 wt.%, or 0.1-5 wt.%, or 0.1-4 wt.%, or 0.1-2 wt.%, > 0.01 wt.%, or > 0.1 wt.%, or < 5 wt.%, or < 3 wt.%, or < 2 wt.% . The adjuvant composition or agrochemical composition can be diluted in solvent. As used herein, solvent refers to water, alcohol, hydrocarbon solvents, vegetable oils, etc. In embodiments, the solvent is water.

In embodiments, the agrochemical composition is a concentrate with the adjuvant composition as a component in amounts of 1-20 wt.%, or 1-15 wt.%, or 1-10 wt.%, or 1-5 wt.%, based on the total weight of the agrochemical composition.

Method of Making the Agrochemical Composition: The agrochemical composition can be simply made by mixing the active ingredient, the adjuvant composition, and optional components together, in sequence, or in any order. In embodiments, the agrochemical composition can be made by mixing the active ingredient, DCR, surfactant system, and optional components together. In embodiments, the agrochemical compositions are made up by simple dilution of concentrates containing desired components (other than water), or by mixing of the individual components, or a combination of diluting a concentrate and adding further individual components or mixtures of components. Such end use mixing can be carried out in the tank from which the formulation is sprayed, or alternatively in a holding tank for filling the spray tank, and termed tank mixing and tank mixtures.

Agrochemical concentrates are agrochemical compositions, which may be aqueous or non-aqueous, and which are designed to be diluted with water (or a water-based liquid) to form the corresponding end-use diluted agrochemical formulations.

Properties: The adjuvant composition comprising DCR aids in the stability of agrochemical composition and inhibits/prevents separation of the active substances from the agrochemical composition. As a component in herbicides or pesticides, the adjuvant helps increase uptake of the active ingredient by the plants, improves the rainfastness, effectiveness / efficiency of the agrochemical composition.

In embodiments, the adjuvant composition in water at 0.25-5% v/v, or 0.3-4% v/v, or 0.4-3% v/v, 0.4-2% v/v, or 0.5-1.5% v/v, or > 0.25% v/v, or > 0.5% v/v, or < 5% v/v, or < 4% v/v, or < 3% v/v, or < 2% v/v, =< 1% v/v has a Draves Wetting Time of < 300, or < 120 , or < 100, or < 75, or < 60, or < 55, or < 50, or < 45, or < 40, or < 35, or < 30 seconds, depending on the formulation. "% v/v" refers to percent volume/volume and is a unit of concentration that describes volume of a solute as a percentage of total volume of a solution.

In embodiments, the adjuvant composition in water at 0.1-5% v/v, or 0.3-4% v/v, or 0.4-3% v/v, 0.4-2% v/v, or 0.5-1.5% v/v, or > 0.25% v/v, or > 0.5% v/v, or < 5% v/v, or < 4% v/v, or < 3% v/v, or < 2% v/v, =< 1% v/v, has a surface tension of > 20, or > 25, or > 30, or < 40, or 20-40, or 25-35, or 30-35, dyn/cm, depending on the formulation.

In embodiments, a plant after applying an herbicide composition comprising adjuvant with DCR, at a rate of 15-2,000 g ai/ha, or 15-1,750 g ai/ha, or 15-1,500 g ai/ha, or 15-1,250 g ai/ha, or 15-1,150 g ai/ha, or > 15 g ai/ha, or > 50 g ai/ha, or > 70 g ai/ha has a reduction in biomass of > 20%, or > 30%, or > 40%, or > 50%, or > 60%, or > 70%, or > 80% within 31 or 21 days after application of the agrochemical composition. "g ai/ha" refers to grams of active ingredient per hectare.

In embodiments, a plant after applying an herbicide composition comprising adjuvant with DCR, at a rate of > 135 g ai/ha, or > 200 g ai/ha, or 140-2000 g ai/ha, or 140-1,750 g ai/ha, or 140-1,500 g ai/ha, or > 15 g ai/ha, or > 50 g ai/ha, or > 70 g ai/ha has a reduction in biomass of > 80%, or > 90%, or > 95%, within 7 or 13 days after application of the agrochemical composition.

In embodiments, the adjuvant composition in liquid at 0.25-5% v/v, or 0.3-4% v/v, or 0.4-3% v/v, 0.4-2% v/v, or 0.5-1.5% v/v, or > 0.25% v/v, or > 0.5% v/v, or < 5% v/v, or < 4% v/v, or < 3% v/v, or < 2% v/v, =< 1% v/v has at least one of:
a pH of > 4.0, or > 4.5, or > 5.0, or > 5.2, or > 5.4, 4.0-8.0, or 4.5-7.0, or 5-6.5,
a surface tension of > 20, or > 25, or > 30, or < 40, or 20-40, or 25-35, or 30-35, dyn/cm, and
a Drave's wetting time of < 300, or < 240, or < 120, or < 100, or < 75, or < 60, or < 55, or < 50 seconds.

Examples: The following illustrative examples are intended to be nonlimiting. The following test methods are used.

### Example 1:

DCR samples are from Kraton Corporation and have properties as shown in Table 1. The DCR 1 sample also has the following: %O2 content of 0.1; % tricyclic compounds of 77.7, aromatic MW252 of 14.0; reactive double bond MW 254 of 0.5; aromatic MW256 of 45.3; reactive double bond MW 258 of 0.8; and cycloaliphatic MW260 of 0.3. The DCR 2 sample also has the following: %O2 content of 0.39; % tricyclic compounds of 69.5, aromatic MW252 of 15.7; reactive double bond MW 254 of 0.1; aromatic MW256 of 40.3; reactive double bond MW 258 of 0.4; and cycloaliphatic MW260 of 0.7.

**Table 1 - DCR Samples**

| | DCR 1 | DCR 2 |
|---|---|---|
| Acid Number mg KOH/g | 3 | 8 |
| Gardner Color | 2 | 12 |
| Viscosity, cSt *@* 40°C | 22 | 45 |
| Density, 20°C (g/cm³) | 0.96 | 0.97 |
| Flash Point, COC (°C) | 142 | 145 |
| Aniline Point (°C) | 13 | 13 |
| Pour Point (°C) | -24 | -14 |
| Kb value | 58 | - |
| δD value | 15.8 | 16.3 |
| δP value | 3.1 | 3.6 |
| δH value | 8.8 | 8.5 |

### In addition to DCR, the following components are also used:

NP-6 is a nonylphenol ethoxylate surfactant having 6 ethylene oxide units.

TOFA is a tall oil fatty acid having a long carbon chain (C18) with an acid number of 196 mgKOH/g, a Gardner color of 3, and % rosin acids of 0.8.

Adjuvant Package 1 ("AP 1") is a methylated seed oil ("MSO") adjuvant package, having 90 wt.% soy methyl ester oil, 5 wt.% NP-6, and 5 wt.% TOFA.

Adjuvant Package 1A ("AP 1A") replaces the soy methyl ester oil in Adjuvant Package 1 with DCR 2.

Adjuvant Package 2 ("AP 2") is Tolex ME8470 a commercially available MSO adjuvant package, having 90 wt.% soy methyl ester oil and 10 wt.% surfactant, e.g., a fatty acid ethoxylate.

Adjuvant Package 2A ("AP 2A") replaces the soy methyl ester oil in Adjuvant Package 2 with DCR 1.

Adjuvant Package 3 ("AP 3") is a crop oil concentrate ("COC") adjuvant package, having 83 wt.% paraffinic oil, 8.5 wt.% NP-6, and 8.5 wt.% TOFA.

Adjuvant Package 3A ("AP 3A") replaces the paraffinic oil in Adjuvant Package 3 with DCR 2.

Adjuvant Package 4 ("AP 4") is a Tolex 8317, a commercially available COC adjuvant package, having 85 wt.% paraffinic oil, and 15 wt.% surfactant, e.g., a fatty acid ethoxylate.

Adjuvant Package 4A ("AP 4A") replaces the paraffinic oil in Adjuvant Package 4 with DCR 1.

Adjuvant Package 5 ("AP 5") is a high surfactant oil concentrate ("HSOC") adjuvant package, having 60 wt.% soy methyl ester, 20 wt.% NP-6, and 20 wt.% TOFA.

Adjuvant Package 5A ("AP 5A") replaces the soy methyl ester oil in Adjuvant Package 5 with DCR 2.

Herbicide 1 is a group 14 herbicide with sodium salt of fomesafen as the active ingredient. The sodium salt of fomesafen is 22.8 wt.% of the total weight of the herbicide with the remaining 77.2 wt.% being other ingredients.

Herbicide 2 is a group 27 herbicide with mesotrione as the active ingredient. The mesotrione is 40 wt.% of the total weight of the herbicide with the remaining 60 wt.% being other ingredients (< 15.wt% ethylene glycol and > 45 wt.% other ingredients).

The weed used in the examples is waterhemp (amaranthus turberculatus). The waterhemp is 2 to 2.5 inches tall when herbicide is applied. The growth conditions for the waterhemp during experimentation is photoperiod 13:11 L:D (hours of light:dark) at 23 ± 4°C in a growth room.

Surface tension is determined using a Kruss Force Tensiometer standard plate surface tension test (ASTM D1331).

Contact Angle is determined using Tantec Contact Angle Micrometer (ASTM D7334-08).

Draves Wetting Time is determined by the Draves Test per ASTM D2281.

Viscosity is Brookfield viscosity and determined using a Brookfield DV1 viscometer with a spindle type 18, 20 RPM and 20°C (ASTM D2196).

% Non-volatile is determined per ASTM E 2043.

Density is determined using a density measuring apparatus manufactured by Mettler-Toledo per ASTM D4052.

Adjuvant Compositions: The adjuvant packages are prepared by mixing the oils and surfactant using a paddle blender. Density and specific gravity are measured on the adjuvant packages alone, while the remaining characteristics and properties are obtained on a mixture of the adjuvant package in water at 1% v/v, or 0.5 v/v as indicated in the tables below.

The adjuvant package compositions above have the characteristics / properties listed in Tables 2-4 as follows.

**Table 2: MSO Adjuvant Package Characteristics / Properties**

| | | AP 1 | AP A1 | AP 2 | AP 2A |
|---|---|---|---|---|---|
| Appearance | | Clear, golden | Slight haze, amber | Clear, golden | Clear, golden |
| Specific Gravity | | 0.892 | 0.971 | 0.896 | 0.968 |
| Density (lb/gal) | | 7.43 | 8.09 | 7.46 | 8.06 |
| Use Rate | | 1% v/v | 1% v/v | 1% v/v | 1% v/v |
| Flash Point | | >200 F | >200 F | >200 F | >200 F |
| pH | | 5.7 @ 1% v/v | 5.7 @ 1% v/v | 5.5@1% v/v | 6.2@1% v/v |
| (342 ppm water) | | | | | |
| Surface Tension (dvn/cm) | | 31.5 @ 1% v/v | 32.8 @ 1% v/v | 26.7 @ 1% v/v | 32.1 @ 1% v/v |
| Contact Angle | | - | - | 42°@1% v/v | 44 °@ 1% v/v |
| Drave's Wetting (seconds) | | 47 sec @ 1% v/v | 97 sec @ 1% v/v | 61@1% v/v | 29@1% v/v |
| Viscosity (cP) | | 7.92 | 272.4 | 20.1 | 73.8 |
| %Non-Volatile | | 99.90% | 97.59% | 99.9% | 95.80% |

| Emulsion Stability | | | | | |
|---|---|---|---|---|---|
| 1. | Initial | 1. White emulsion | 1. Yellowish/white emulsion | 1. White emulsion | 1. White emulsion |
| 2. | 15m | 2. 1 ml cream | | 2.0.5 ml cream | 2.6 ml cream |
| 3. | 30m | 3. 2 ml cream | 2.3 ml cream | 3.0.5 ml cream | 3.7.5 ml cream |
| 4. | 60m | 4. 4 ml cream | 3.6 ml cream | 4.0.5 ml cream | 4.7.5 ml cream |
| 5. | 120m | 5. 4 ml cream | 4.5 ml cream | 5.1 ml cream | 5.7 ml cream |
| 6. | 24h | 6. 6 ml cream | 5.6 ml cream | 6.1 ml cream | 6.7.5 ml cream |
| | | | 6.6 ml cream | | |

| Stress Testing | | | | | |
|---|---|---|---|---|---|
| 1. | Ambient | 1. Clear, uniform | 1. Bottom 15% is hazy, clear above | 1. Clear, uniform | 1.Clear, uniform |
| 2. | 50°C/l mo | 2. Clear, uniform, | | 2. Clear, uniform | 2. Clear, uniform |
| 3. | 4°C/l mo | 3. Clear, uniform Solid, after warming, clear, uniform | 2. Clear, uniform | 3.Clear, uniform | 3.Clear, uniform |
| 4. | Freezer | | 3. Hazy, somewhat viscous Solid, after warming, slight haze | 4. Solid, after warming, clear, uniform | 4. Solid, after warming, clear, uniform |

**Table 3: COC Adjuvant Package Characteristics / Properties**

| | | AP 3 | AP 3A | AP4 | AP4A |
|---|---|---|---|---|---|
| Appearance | | Clear, golden | Slight haze, amber | Clear, golden | Clear, golden |
| Specific Gravity | | 0.861 | 0.971 | 0.863 | 0.964 |
| Density (lb/gal) | | 7.17 | 8.09 | 7.2 | 8.03 |
| Use Rate | | 1% v/v | 1% v/v | 1% | 1% |
| Flash Point | | >200 F | >200 F | >200 F | >200 F |
| pH | | 5.5 @ 1% v/v | 5.7 @ 1% v/v | 4.8@1% v/v | 5.2@1% v/v |
| (342 ppm water) | | | | | |
| Surface Tension (dyn/cm) | | 30.4 @ 1% v/v | 32.7 @ 1% v/v | 33.0@1% v/v | 31.9@ 1% v/v |
| Contact Angle | | | | 51°@ 1% v/v | 48°@ 1% v/v |
| Drave's Wetting (seconds) | | 49 sec @ 1% v/v | 53 sec @ 1% v/v | 63 @ 1% v/v | 40 @ 1% v/v |
| Viscosity (cP) | | 11.58 | 232.2 | 20.1 | 4.0 |
| %Non-Volatile | | 99.68% | 96.99% | 99.3 | 96.68 |

| Emulsion Stability | | | | | |
|---|---|---|---|---|---|
| 1. | Initial | 1. White emulsion | 1. Yellowish/white emulsion | 1. White emulsion | 1. White emulsion |
| 2. | 15m | 2. 9 ml cream | | | 2. 0 ml |
| 3. | 30m | 3. 9 ml cream | 2. 5 ml cream | 2. 0 ml cream | 3. 1 ml cream |
| 4. | 60m | 4. 10 ml cream | 3. 4 ml cream | 3. 0 ml cream | 4. 2 ml cream |
| 5. | 120m | 5. 10 ml cream | 4. 8 ml cream | 4. 2 ml cream | 5. 3 ml cream |
| 6. | 24h | 6. 6 ml cream, 4 ml oil | 5. 8 ml cream | 5. 4 ml cream, 6 ml cream | 6. 4 ml cream |
| | | | 6. 5 ml cream, 3 ml oil | | |

| Stress Testing | | | | | |
|---|---|---|---|---|---|
| 1. | Ambient | 1. Clear, uniform | 1. Bottom 15% is hazy, clear above | 1. Clear, uniform | 1. Clear, uniform |
| 2. | 50°C/l mo | 2. Clear, uniform | | 2. Clear, uniform | 2. Clear, uniform |
| 3. | 4°C/l mo | 3. Clear, uniform | 2. Clear, uniform | 3. Clear, uniform Solid, after warming, clear, uniform | 3. Clear, uniform |
| 4. | Freezer | 4. Solid, after warming, clear, uniform | 3. Hazy, somewhat viscous | | 4. Solid, after warming, clear, uniform |
| | | | 4. Solid, after warming, slight haze | | |

**Table 4: HSOC Adjuvant Package Characteristics / Properties**

| | | AP 5 | AP 5A |
|---|---|---|---|
| Appearance | | Clear, golden | Slight haze, amber |
| Specific Gravity | | 0.916 | 0.969 |
| Density (lb/gal) | | 7.63 | 8.07 |
| Use Rate | | 0.5% v/v | 0.5% v/v |
| Flash Point | | >200 F | >200 F |
| pH | | 5.6 @ 0.5% v/v | 5.4 @ 0.5% v/v |
| (342 ppm water) | | | |
| Surface Tension (dyn/cm) | | 31.3 @ 0.5% v/v | 32.4 @ 0.5% v/v |
| Drave's Wetting (seconds) | | 158 sec @ 0.5% v/v | 111 sec @ 0.5% v/v |
| Viscosity (cP) | | 13.38 | 149.1 |
| %Non-Volatile | | 99.92% | 98.09% |

| Emulsion Stability | | | |
|---|---|---|---|
| 1. | Initial | 1. White emulsion | 1. Yellowish/white emulsion |
| 2. | 15m | 2. 8 ml cream | |
| 3. | 30m | 3. 9 ml cream | 2. 5 ml cream |
| 4. | 60m | 4. 9 ml cream | 3. 6 ml cream |
| 5. | 120m | 5. 9 ml cream | 4. 7 ml cream |
| 6. | 24h | 6. 6 ml cream, 4 ml oil | 5. 8 ml cream |
| | | | 6. 8 ml cream, 2 ml oil |

| Stress Testing | | | |
|---|---|---|---|
| 1. | Ambient | 1. Clear, uniform | 1. Clear, uniform |
| 2. | 50°C/l mo | 2. Clear, uniform | 2. Clear, uniform |
| 3. | 4°C/l mo | 3. Clear, uniform | 3. Hazy, somewhat viscous, uniform |
| 4. | Freezer | 4. Solid, after warming, clear, uniform | |
| | | | 4. Solid, after warming, clear, uniform |

Agrochemical (Herbicide) Composition: To form the herbicide composition, water is mixed with an active ingredient and then the adjuvant package are added. The indicated adjuvant package is present at an amount of 1% v/v in the final herbicide compositions.

The herbicide compositions are applied to the waterhemp using a single nozzle boom DeVries Spray Chamber, with nozzle DG 9502EVS at 40 psi and 2.41 mph. The boom height is set to 15-20 inches and the volume is 15 GPA (gallons per acre).

The plants are evaluated at 7-, 14-, and 21-days after application ("DAA") of the herbicide composition. To determine herbicide efficacy assessment samples are visually inspected for efficacy at the indicated intervals and averaged. The results are expressed in terms of percent plant necrosis, where 0% represents no plant necrosis, and 100% represents complete plant necrosis. The results are summarized in the tables below.

The samples are harvested (plants cut at the base), weighed, and evaluated for biomass at 21 days past application of the herbicide. The samples are oven dried at 60°C for 3 days prior to weight determination.

Example 1: Examples 1 to 4, 1-1 to 1-4, 1A-1 to 1A-4, 1B-1 to 1B-4 compare Adjuvant Packages 1A to Adjuvant Packages 1 and 2 in herbicide compositions utilizing Herbicide 1.

**Table 5. Plant Necrosis and Biomass Reduction for Herbicide Compositions comprising Adjuvant Packages 1, 1A, and 1B and Herbicide 1**

| **Example No.** | **Herbicide rate (g ai/ha)** | **Adjuvant Package** | **Rate (%v/v)** | **7 DAA (%)** | **14 DAA (%)** | **21 DAA (%)** | **Biomass Reduction (%)** |
|---|---|---|---|---|---|---|---|
| 1 | 70 | - | 1 | 27 | 23 | 3 | 26 |
| 2 | 140 | - | 1 | 34 | 24 | 15 | 31 |
| 3 | 210 | - | 1 | 64 | 51 | 31 | 44 |
| 4 | 280 | - | 1 | 50 | 38 | 50 | 27 |
| 1-1 | 70 | AP 1 | 1 | 98 | 98 | 91 | 91 |
| 1-2 | 140 | AP 1 | 1 | 99 | 99 | 97 | 88 |
| 1-3 | 210 | AP 1 | 1 | 100 | 100 | 100 | 97 |
| 1-4 | 280 | AP 1 | 1 | 100 | 100 | 100 | 94 |
| 1A-1 | 70 | AP 1A | 1 | 93 | 94 | 92 | 85 |
| 1A-2 | 140 | AP 1A | 1 | 100 | 98 | 91 | 92 |
| 1A-3 | 210 | AP 1A | 1 | 100 | 100 | 100 | 97 |
| 1A-4 | 280 | AP 1A | 1 | 95 | 92 | 77 | 75 |
| 1B-1 | 70 | AP 2 | 1 | 90 | 95 | 82 | 87 |
| 1B-2 | 140 | AP 2 | 1 | 83 | 98 | 95 | 92 |
| 1B-3 | 210 | AP 2 | 1 | 100 | 100 | 100 | 98 |
| 1B-4 | 280 | AP 2 | 1 | 100 | 100 | 100 | 97 |

Example 2: Examples 2A-1 to 2A-7 and 2-1 to 2-7 compare the Adjuvant Package 2A to Adjuvant Package 2 in herbicide compositions utilizing Herbicide 1.

**Table 6. Plant Necrosis and Biomass Reduction for Adjuvant Package 2A and Adjuvant Package 2 and Herbicide 1**

| Example No. | Herbicide rate (g ai/ha) | Adjuvant Package | 7 DAA (%) | 14 DAA (%) | 21 DAA (%) | Biomass Reduction (%) |
|---|---|---|---|---|---|---|
| 2A-1 | 17.5 | AP 2A | 92 | 57 | 48 | 70 |
| 2A-2 | 35 | AP 2A | 97 | 81 | 83 | 76 |
| 2A-3 | 70 | AP 2A | 99 | 99 | 99 | 94 |
| 2A-4 | 140 | AP 2A | 99 | 96 | 92 | 94 |
| 2A-5 | 280 | AP 2A | 100 | 100 | 100 | 95 |
| 2A-6 | 560 | AP 2A | 100 | 100 | 100 | 95 |
| 2A-7 | 1120 | AP 2A | 100 | 100 | 100 | 98 |
| 2-1 | 17.5 | AP 2 | 97 | 70 | 58 | 75 |
| 2-2 | 35 | AP 2 | 99 | 91 | 90 | 89 |
| 2-3 | 70 | AP 2 | 99 | 92 | 92 | 90 |
| 2-4 | 140 | AP 2 | 100 | 98 | 92 | 93 |
| 2-5 | 280 | AP 2 | 100 | 100 | 100 | 95 |
| 2-6 | 560 | AP 2 | 100 | 100 | 100 | 95 |
| 2-7 | 1120 | AP 2 | 100 | 100 | 100 | 98 |

| | | | | | | |
|---|---|---|---|---|---|---|
| g ai/ha = grams per active ingredient per hectare and indicates weight per unit of surface | | | | | | |

Example 3: Examples 1 to 4, 3-1 to 3-4, 3A-1 to 3A-4, 3B-1 to 3B-4 compare Adjuvant Packages 3A to Adjuvant Packages 3 and 4 in herbicide compositions utilizing Herbicide 1.

**Table 7. Plant Necrosis and Biomass Reduction for Herbicide Compositions comprising Adjuvant Packages 3, 3A, and 3B and Herbicide 1**

| **Example No.** | **Herbicide rate (g ai/ha)** | **Adjuvant Package** | **Rate (%v/v)** | **7 DAA (%)** | **14 DAA (%)** | **21 DAA (%)** | **Biomass Reduction (%)** |
|---|---|---|---|---|---|---|---|
| 1 | 70 | - | 1 | 12 | 2 | 0 | 44 |
| 2 | 140 | - | 1 | 40 | 12 | 0 | 46 |
| 3 | 210 | - | 1 | 45 | 41 | 23 | 62 |
| 4 | 280 | - | 1 | 37 | 19 | 5 | 54 |
| 3-1 | 70 | AP 3 | 1 | 99 | 78 | 46 | 75 |
| 3-2 | 140 | AP 3 | 1 | 99 | 90 | 78 | 82 |
| 3-3 | 210 | AP 3 | 1 | 100 | 99 | 98 | 98 |
| 3-4 | 280 | AP 3 | 1 | 99 | 100 | 100 | 100 |
| 3A-1 | 70 | AP 3A | 1 | 91 | 24 | 0 | 40 |
| 3A-2 | 140 | AP 3A | 1 | 98 | 59 | 37 | 57 |
| 3A-3 | 210 | AP 3A | 1 | 98 | 77 | 52 | 74 |
| 3A-4 | 280 | AP 3A | 1 | 98 | 74 | 51 | 76 |
| 3B-1 | 70 | AP 4 | 1 | 98 | 58 | 24 | 84 |
| 3B-2 | 140 | AP 4 | 1 | 100 | 89 | 64 | 68 |
| 3B-3 | 210 | AP 4 | 1 | 100 | 71 | 55 | 73 |
| 3B-4 | 280 | AP 4 | 1 | 100 | 89 | 68 | 85 |

Example 4: Examples 4A-1 to 4A-7 and 4-1 to 4-7 compare Adjuvant Package 4A to Adjuvant Package 4 in herbicide compositions utilizing Herbicide 1.

**Table 8. Plant Necrosis and Biomass Reduction for Herbicide Compositions comprising Adjuvant Packages 4 and 4A and Herbicide 1**

| Example No. | Herbicide (g ai/ha) | Adjuvant Package | 7 DA-A (%) | 14 DA-A (%) | 21 DA-A (%) | Biomass Reduction (%) |
|---|---|---|---|---|---|---|
| 4A-1 | 17.5 | AP 4A | 97 | 91 | 89 | 82 |
| 4A-2 | 35 | AP 4A | 98 | 97 | 96 | 91 |
| 4A-3 | 70 | AP 4A | 99 | 99 | 98 | 91 |
| 4A-4 | 140 | AP 4A | 100 | 100 | 100 | 94 |
| 4A-5 | 280 | AP 4A | 100 | 100 | 100 | 92 |
| 4A-6 | 560 | AP 4A | 100 | 100 | 100 | 93 |
| 4A-7 | 1120 | AP 4A | 100 | 100 | 100 | 91 |
| 4-1 | 17.5 | AP 4 | 97 | 93 | 86 | 84 |
| 4-2 | 35 | AP 4 | 95 | 83 | 73 | 70 |
| 4-3 | 70 | AP 4 | 99 | 95 | 94 | 88 |
| 4-4 | 140 | AP 4 | 92 | 77 | 73 | 84 |
| 4-5 | 280 | AP 4 | 100 | 100 | 100 | 89 |
| 4-6 | 560 | AP 4 | 100 | 100 | 100 | 86 |
| 4-7 | 1120 | AP 4 | 100 | 100 | 100 | 90 |

| | | | | | | |
|---|---|---|---|---|---|---|
| g ai/ha = grams per active ingredient per hectare and indicates weight per unit of surface | | | | | | |

Example 5: Examples 1 to 4, 5-1 to 5-4, 5A-1 to 5A-4, 5B-1 to 5B-4 compare Adjuvant Packages 1A to Adjuvant Packages 1 and 2 in herbicide compositions utilizing Herbicide 2.

**Table 9. Plant Necrosis and Biomass Reduction for Herbicide Compositions comprising Adjuvant Packages 1, 1A, and 1B and Herbicide 2**

| **Example No.** | **Herbicide rate (g ai/ha)** | **Adjuvant Package** | **Rate (%v/v)** | **7 DAA (%)** | **14 DAA (%)** | **21 DAA (%)** | **Biomass Reduction (%)** |
|---|---|---|---|---|---|---|---|
| 1 | 26.3 | - | 1 | 95 | 95 | 85 | 95 |
| 2 | 52.6 | - | 1 | 93 | 95 | 92 | 100 |
| 3 | 79 | - | 1 | 100 | 100 | 100 | 99 |
| 4 | 105 | - | 1 | 100 | 100 | 100 | 100 |
| 5-1 | 26.3 | AP 1 | 1 | 100 | 100 | 100 | 100 |
| 5-2 | 52.6 | AP 1 | 1 | 100 | 100 | 100 | 100 |
| 5-3 | 79 | AP 1 | 1 | 100 | 100 | 100 | 100 |
| 5-4 | 105 | AP 1 | 1 | 98 | 99 | 99 | 100 |
| 5A-1 | 26.3 | AP 1A | 1 | 99 | 100 | 98 | 99 |
| 5A-2 | 52.6 | AP 1A | 1 | 100 | 100 | 100 | 99 |
| 5A-3 | 79 | AP 1A | 1 | 100 | 100 | 100 | 100 |
| 5A-4 | 105 | AP 1A | 1 | 99 | 100 | 100 | 100 |
| 5B-1 | 26.3 | AP 2 | 1 | 100 | 99 | 98 | 99 |
| 5B-2 | 52.6 | AP 2 | 1 | 100 | 100 | 100 | 99 |
| 5B-3 | 79 | AP 2 | 1 | 100 | 100 | 100 | 100 |
| 5B-4 | 105 | AP 2 | 1 | 99 | 100 | 100 | 100 |

Example 6: Examples 1 to 4, 6-1 to 6-4, 6A-1 to 6A-4, 6B-1 to 6B-4 compare Adjuvant Packages 3A to Adjuvant Packages 3 and 1B in herbicide compositions utilizing Herbicide 2.

**Table 10. Plant Necrosis and Biomass Reduction for Herbicide Compositions comprising Adjuvant Packages 3, 3A, and 4 and Herbicide 2**

| **Example No.** | **Herbicide rate (g ai/ha)** | **Adjuvant Package** | **Rate (%v/v)** | **7 DAA (%)** | **14 DAA (%)** | **21 DAA (%)** | **Biomass Reduction (%)** |
|---|---|---|---|---|---|---|---|
| 1 | 26.3 | - | 1 | 45 | 61 | 55 | 88 |
| 2 | 52.6 | - | 1 | 55 | 53 | 47 | 91 |
| 3 | 79 | - | 1 | 53 | 74 | 72 | 95 |
| 4 | 105 | - | 1 | 60 | 86 | 92 | 94 |
| 6-1 | 26.3 | AP 3 | 1 | 86 | 98 | 97 | 98 |
| 6-2 | 52.6 | AP 3 | 1 | 94 | 100 | 100 | 98 |
| 6-3 | 79 | AP 3 | 1 | 98 | 100 | 100 | 98 |
| 6-4 | 105 | AP 3 | 1 | 95 | 100 | 100 | 98 |
| 6A-1 | 26.3 | AP 3A | 1 | 86 | 99 | 99 | 99 |
| 6A-2 | 52.6 | AP 3A | 1 | 91 | 90 | 83 | 98 |
| 6A-3 | 79 | AP 3A | 1 | 97 | 100 | 100 | 98 |
| 6A-4 | 105 | AP 3A | 1 | 97 | 100 | 100 | 98 |
| 6B-1 | 26.3 | AP 4 | 1 | 92 | 97 | 96 | 98 |
| 6B-2 | 52.6 | AP 4 | 1 | 93 | 98 | 97 | 97 |
| 6B-3 | 79 | AP 4 | 1 | 97 | 100 | 100 | 97 |
| 6B-4 | 105 | AP 4 | 1 | 97 | 100 | 100 | 98 |

As used herein, the term "comprising" means including elements or steps that are identified following that term, but any such elements or steps are not exhaustive, and an embodiment can include other elements or steps. As used herein, the term "comprising" means including elements or steps that are identified following that term, but any such elements or steps are not exhaustive, and an embodiment can include other elements or steps. Although the terms "comprising" and "including" have been used herein to describe various aspects, the terms "consisting essentially of" and "consisting of" can be used in place of "comprising" and "including" to provide for more specific aspects of the disclosure and are also disclosed.

## Claims

1. An adjuvant package for use in an agrochemical composition, the adjuvant package consists essentially of:
20-99 wt.% of a decarboxylated rosin acid,
wherein the decarboxylated rosin acid has:
a Kb value of 25-90, according to ASTM D1133;
aniline point of 3-40°C, according to ASTM D61 1;
a δD value of 14-18, a δP value of 3-6; and δH value of 7-10; and
1-80 wt.% of a surfactant system consisting essentially of one or more surfactants selected from nonionic, anionic, cationic, amphoteric surfactants, and mixtures thereof; and
when the adjuvant package is diluted in liquid to 0.1-5% v/v, the liquid exhibits a surface tension of 20-40 dyn/cm.

2. The adjuvant package of claim 1, when the adjuvant package is diluted in liquid to 0.25-5% v/v, the liquid exhibits a Drave's Wetting Time of < 300 seconds.

3. The adjuvant package of any of claims 1-2, wherein the surfactant systems is a nonionic surfactant selected from the group of ethoxylates, fatty acid derivatives, block copolymers, alkyl polyglucosides, and mixtures thereof.

4. The adjuvant package of any of claims 1-3, wherein the surfactant system further comprises a fatty acid as a co-surfactant in a weight ratio of co-surfactant to surfactant system of 1:10 or 10:1.

5. The adjuvant package of any of claims 1-4, wherein the decarboxylated rosin acid comprises one or more C=C groups, and 40 - 100 wt.% of tricyclic compounds having 18 - 20 carbon atoms.

6. The adjuvant package of any of claims 1-5, wherein sum of tricyclic compounds as aromatic and cycloaliphatic in the decarboxylated rosin acid is > 50 wt.%, based on total weight of the decarboxylated rosin acid.

7. The adjuvant package of any of claims 1-6, wherein amount of the tricyclic cycloaliphatic compounds in the decarboxylated rosin acid is > 15 wt.%, based on total weight of the decarboxylated rosin acid.

8. The adjuvant package of any of claims 1-7, wherein the decarboxylated rosin acid has at least one of:
an aniline point of 3 - 40°C, according to ASTM D611;
a pour point of -40 to +10°C, according to ASTM D97;
a flash point of 135 - 175°C, according to ASTM D92;
a boiling point of 200 - 390°C, according to D2887;
a Gardner Color of 0 - 12.0, according to ASTM D6166;
a sulfur content of < 500 ppm, according to ASTM D5453;
a Kb (Kauri butanol) value of 30 - 85, according to ASTM D1133;
a viscosity index of < -100, according to ASTM D2270; and
a viscosity of 20 - 50 cSt, according to ASTM D-445 at 40°C.

9. The adjuvant package of any of claims 1-8, wherein the decarboxylated rosin acid is unhydrogenated, and wherein the unhydrogenated decarboxylated rosin acid has at least one of:
a C19 species with a MW of 262 in an amount of 5-20 wt.%;
a C19 species with a MW of 260 in an amount of 5-25 wt.%;
a C19 species with a MW of 256 in an amount of 35-55 wt.%;
a C19 species with a MW of 252 in an amount of 5-20 wt.%;
a C13 species with a MW of 180 in an amount of 0-5 wt.%; and
a C13 species with a MW of 174 in an amount of 5-25 wt.%.

10. The adjuvant package of any of claims 1-9, further comprises additives selected from the group consisting of dispersing agents, polymers, wetting agents, stabilizers, pH modifiers, anti-freeze agents, anti-drift agents, suspending agents, emulsifiers, humectants, antifoams, solvents, promoters, fertilizers, preservatives, and combinations thereof.

11. An agrochemical composition comprising the adjuvant package of any of claims 1-10, and an active ingredient selected from the group consisting of: fungicides, herbicides, insect repellents, insecticides, algicides, molluscicides, miticides, rodenticides, and mixtures thereof.

12. A method of preparing an agrochemical composition comprising the steps of:
providing the adjuvant package of any of claims 1-10;
providing an active ingredient selected from the group of fungicides, herbicides, insect repellents, insecticides, algicides, molluscicides, miticides, rodenticides, and mixtures thereof;
providing 0-5 wt.% of optional components selected from dispersing agents, polymers, wetting agents, stabilizers, pH modifiers, anti-freeze agents, anti-drift agents, suspending agents, emulsifiers, humectants, antifoams, solvents, promoters, fertilizers, preservatives and combinations thereof; and
mixing the active ingredient, the adjuvant package, and the optional components to form an agrochemical concentrate; and
diluting the agrochemical concentrate in liquid to 0.25-5% v/v forming the agrochemical composition; and
wherein the agrochemical composition has a Draves Wetting Time of < 300 seconds, per ASTM D2281.

13. An agrochemical concentrate comprising:
1-50 wt.% of an active ingredient selected from the group of fungicides, herbicides, insect repellents, insecticides, algicides, molluscicides, miticides, rodenticides, and mixtures thereof;
0.2-20 wt.% of a decarboxylated rosin acid,
wherein the decarboxylated rosin acid has:
a Kb value of 25-90, according to ASTM D1133;
aniline point of 3-40°C, according to ASTM D611;
a δD value of 14-18, a δP value of 3-6; and δH value of 7-10; and
0.01-10 wt.% of a surfactant system consisting essentially of one or more surfactants selected from nonionic, anionic, cationic, amphoteric surfactants, and mixtures thereof;
up to 30 wt.% components selected from dispersing agents, polymers, wetting agents, stabilizers, pH modifiers, anti-freeze agents, anti-drift agents, suspending agents, emulsifiers, humectants, antifoams, solvents, promoters, fertilizers, preservatives and combinations thereof; and
when the agrochemical concentration is diluted in a liquid composition at a concentration of 0.25-5% v/v, the liquid composition has a Draves Wetting Time of < 300 seconds, per ASTM D2281.

14. The agrochemical concentrate of claim 13, wherein
the active ingredient is an herbicide selected from the group of bicyclopyrone, mesotrione, fomesafen, glysophate, tralkoxydim, napropamide, amitraz, propanil, pyrimethanil, dicloran, tecnazene, toclofos methyl, flamprop M, 2,4-D, MCPA, mecoprop, clodinafop-propargyl, cyhalofop-butyl, diclofop methyl, haloxyfop, quizalofop-P, indol-3-ylacetic acid, 1-naphthylacetic acid, isoxaben, tebutam, chlorthal dimethyl, benomyl, benfuresate, dicamba, dichlobenil, benazolin, triazoxide, fluazuron, teflubenzuron, phenmedipham, acetochlor, alachlor, metolachlor, pretilachlor, thenylchlor, alloxydim, butroxydim, clethodim, cyciodim, sethoxydim, tepraloxydim, pendimethalin, dinoterb, bifenox, oxyfluorfen, acifluorfen, fluoroglycofen-ethyl, bromoxynil, ioxynil, imazamethabenz-methyl, imazapyr, imazaquin, imazethapyr, imazapic, imazamox, flumioxazin, flumiclorac-pentyl, picloram, amodosulfuron, chlorsulfuron, nicosulfuron, rimsulfuron, triasulfuron, triallate, pebulate, prosulfocarb, molinate, atrazine, simazine, cyanazine, ametryn, prometryn, terbuthylazine, terbutryn, sulcotrione, isoproturon, linuron, fenuron, chlorotoluron, metoxuron and mixtures thereof; and
the surfactant system is a nonionic surfactant consisting essentially of an ethoxylate, and a fatty acid as a co-surfactant in a weight ratio of co-surfactant to surfactant system of 1:10 or 10:1.

15. An agrochemical composition for spraying onto a plant comprising:
0.01-5 wt.% of an active ingredient selected from the group of fungicides, herbicides, insect repellents, insecticides, algicides, molluscicides, miticides, rodenticides, and mixtures thereof;
0.002-5 wt.% of a decarboxylated rosin acid,
wherein the decarboxylated rosin acid has:
a Kb value of 25-90, according to ASTM D1133;
aniline point of 3-40°C, according to ASTM D611;
a δD value of 14-18, a δP value of 3-6; and δH value of 7-10; and
0.001-5 wt.% of a surfactant system consisting essentially of one or more surfactants selected from nonionic, anionic, cationic, amphoteric surfactants, and mixtures thereof;
up to 5 wt.% components selected from dispersing agents, polymers, wetting agents, stabilizers, pH modifiers, anti-freeze agents, anti-drift agents, suspending agents, emulsifiers, humectants, antifoams, solvents, promoters, fertilizers, preservatives and combinations thereof; and
up to 99.9 wt.% liquid;
wherein the agrochemical composition has a Draves Wetting Time of < 300 seconds, per ASTM D2281.
